# EUROPEAN PATENT SPECIFICATION

(11) **EP 0 616 713 B1**
(45) Date of publication and mention of the grant of the patent: **25.10.1995**
(21) Application number: 92923765.9
(22) Date of filing: 21.11.1992
(51) Int. Cl.: G06F 17/30

(54) **METHOD AND SYSTEM FOR CREATING AND MAINTAINING MULTIPLE DOCUMENT VERSIONS IN A DATA PROCESSING SYSTEM LIBRARY**
VERFAHREN UND SYSTEM ZUR HERSTELLUNG UND ZUM ERHALT MEHRERER DOKUMENTVERSIONEN IN EINER DATENVERARBEITUNGSYSTEMBIBLIOTHEK
PROCEDE ET SYSTEME DE CREATION ET DE CONSERVATION DES VERSIONS MULTIPLES DE DOCUMENTS DANS UNE BIBLIOTHEQUE POURVUE D'UN SYSTEME DE TRAITEMENT DES DONNEES

(30) Priority: 09.12.1991 US 805447
(43) Date of publication of application: 28.09.1994
(73) Proprietor: IBM DEUTSCHLAND GMBH, D-70569 Stuttgart (DE); International Business Machines Corporation, Armonk, N.Y. 10504 (US)
(72) Inventor: HOWELL, William, Edward, North Richland Hills, TX 76180 (US); REDDY, Hari, Nukalapati, Colleyville, TX 76034 (US); WANG, Diana, S., Trophy Club, TX 76262 (US)
(74) Representative: Schäfer, Wolfgang, Dipl.-Ing.
(86) International application number: PCT/EP92/02682
(87) International publication number: WO 93/12498

(56) References cited:
- EP-A- 0 230 616
- EP-A- 0 371 606
- PATENT ABSTRACTS OF JAPAN vol. 15, no. 79 (P-1170)25 February 1991 & JP-A-22 97 284 (HITACHI LTD.) 7 December 1990

## Description

### BACKGROUND OF THE INVENTION

### 1. Field of the Invention:

The present invention relates in general to data processing system implemented libraries and in particular to a method and system for creating and maintaining multiple document versions within a data processing system implemented library. Still more particularly the present invention relates a method and system for creating and maintaining multiple predecessor and successor versions of a document within a data processing system implemented library.

### 2. Description of the Prior Art:

Electronically implemented "libraries" are rapidly surpassing more traditional forms of information storage in the world today. It is quite common for data processing system implemented libraries to maintain and control thousand of different objects, or documents. The rules by which such documents may be altered and/or maintained are typically governed by various standards such as the International Standard ISO/IEC 10166, Document Filing and Retrieval (DFR).

One problem which exists in such electronic libraries is the management and control of multiple versions of a selected document in a so-called "Conceptual Document" wherein all documents therein are related. Many systems exist for governing relationships between multiple versions of a single document in a linear relationship. That is, a relationship wherein a selected document may have a single predecessor document and a single successor document (see e.g. EP-A-0230616). While the need for a method and system which permits each document to have multiple predecessors and successor documents has been generally alluded to, no current library system permits such a relationship to be created and maintained.

It should therefore be apparent that a need exist for a method and system which permits multiple predecessor and successor versions of a document to be created and maintained within a data processing system library.

### SUMMARY OF THE INVENTION

It is therefore one object of the present invention to provide an improved data processing system implemented library.

It is another object of the present invention to provide an improved method and system for creating and maintaining multiple document versions within a data processing system implemented library.

It is yet another object of the present invention to provide an improved method and system for creating and maintaining multiple predecessor and successor versions of a document within a data processing system implemented library.

The foregoing objects are achieved by the subject-matter of Claims 1 and 5. Selected documents within a data processing system implemented library are uniquely identified as root documents and a version-root identifier for each successor version of a particular root document is established. Thereafter, a selected version-root identifier is automatically associated with each created successor version of a root document. Upon the creation of a successor version of a root document and a second predecessor document, the version-root identifier associated with the root document is automatically associated with the successor version and the second predecessor document. Upon the creation of a successor version based upon multiple non-root predecessor documents a particular non-root predecessor document is automatically selected as a root document and a version-root identifier is established and associated therewith. Thereafter, the newly established version-root identifier is automatically associated with all non-root predecessor documents and the successor version based thereon.

### BRIEF DESCRIPTION OF THE DRAWINGS

The novel features believed characteristic of the invention are set forth in the appended claims. The invention itself, however, as well as a preferred mode of use, further objects and advantages thereof, will best be understood by reference to the following detailed description of an illustrative embodiment when read in conjunction with the accompanying drawings, wherein:
- Fig. 1: is a pictorial representation of a distributed data processing system which may be utilized to implement the method and system of the present invention;
- Fig. 2: is a high level logic flow chart illustrating a software implementation of the method and system of the present invention;
- Fig. 3: is a pictorial representation of a first Conceptual Document structure which may be implemented utilizing the method and system of the present invention;
- Fig. 4: is a pictorial representation of a second Conceptual Document structure which may be implemented utilizing the method and system of the present invention; and
- Fig. 5: is a pictorial representation of a third Conceptual Document structure which may be implemented utilizing the method and system of the present invention.

### DETAILED DESCRIPTION OF THE PREFERRED EMBODIMENT

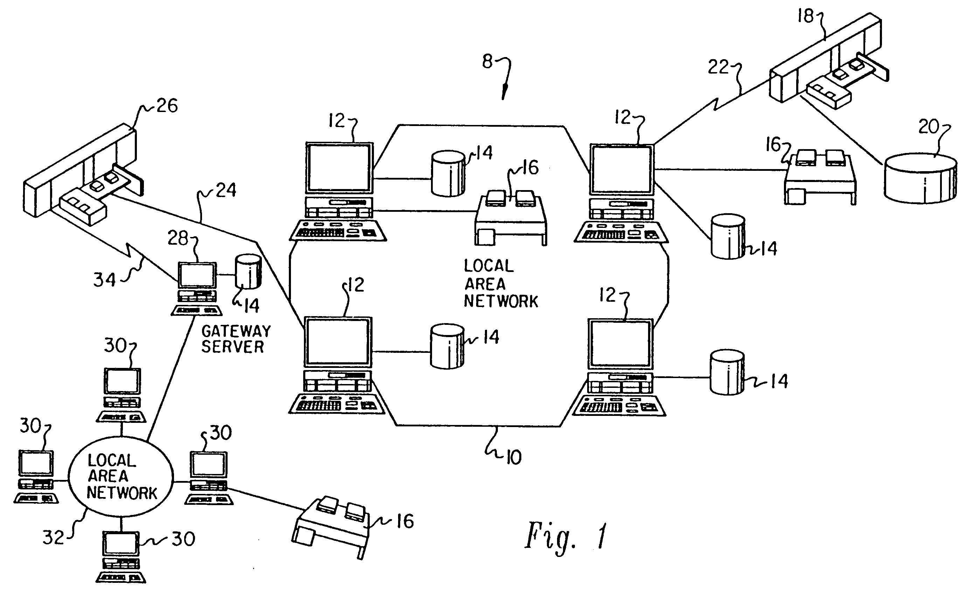

With reference now to the figures and in particular with reference to Fig. 1, there is depicted a pictorial representation of a distributed data processing system 8 which may be utilized to implement the method and system of the present invention. As may be seen, distributed data processing system 8 may include a plurality of networks, such as Local Area Networks (LAN) 10 and 32, each of which preferably includes a plurality of individual computers 12 and 30 respectively. Of course, those skilled in the art will appreciate that a plurality of Intelligent Work Stations (IWS) coupled to a host processor may be utilized to implement each such network.

As is common in such data processing systems, each individual computer may be coupled to a storage device 14 and/or a printer/output device 16. One or more such storage devices 14 may be utilized, in accordance with a method and system of the present invention, to store the various objects or documents which may be periodically accessed by a user having access to such objects or documents. Further, one or more such storage devices 14 may be utilized, as will be explained in greater detail herein, to store multiple predecessors and/or successors of a particular document within a data processing system implemented library, in accordance with a method and system of the present invention.

Still referring to Fig. 1, it may be seen that distributed data processing system 8 may also include main frame computers, such as main frame computer 18, which may be preferably coupled to Local Area Network (LAN) 10 by means of communication link 22. Main frame computer 18 may be coupled to a storage device 20 which may serve as remote storage for Local Area Network (LAN) 10 and may be coupled via communications controller 26 and communications link 34 to gateway server 28. Gateway server 28 is preferably an individual computer or Intelligent Work Station (IWS) which serves to link Local Area Network (LAN) 32 to Local Area Network (LAN) 10.

As discussed above with respect to Local Area Network (LAN) 32 and Local Area Network (LAN) 10, a plurality of data objects or documents may be stored within storage device 20 and controlled by main frame computer 18, as Resource Manager or Library Service for the data objects and documents thus stored. In the depicted embodiment of the present invention such objects and/or documents are preferably stored and maintained in accordance with International Standard ISO/IEC 10166, Document Filing and Retrieval (DFR). Those skilled in the art will appreciate that it is often desirable to maintain a data processing system implemented library at a central location within a distributed data processing system wherein users throughout the distributed data processing system may access objects or documents stored therein.

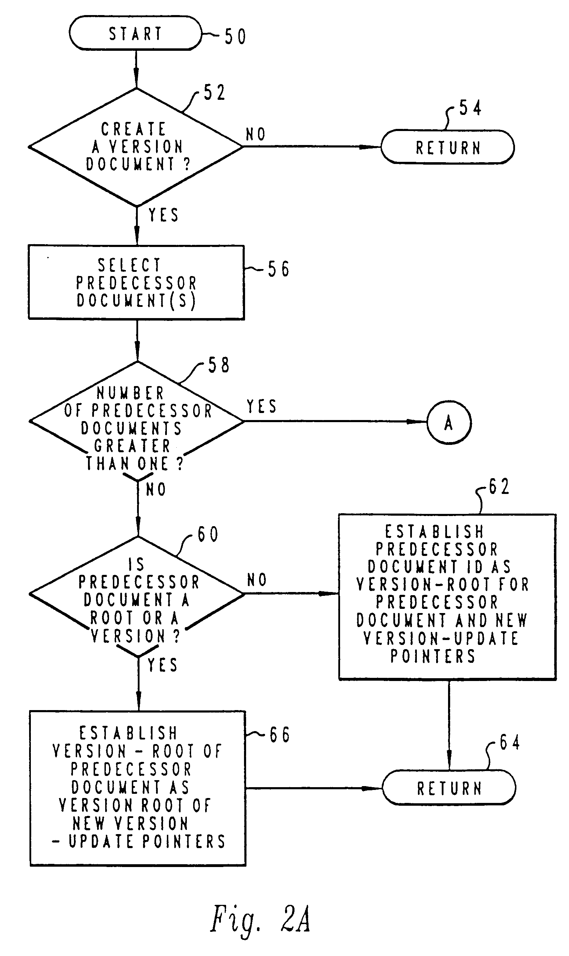

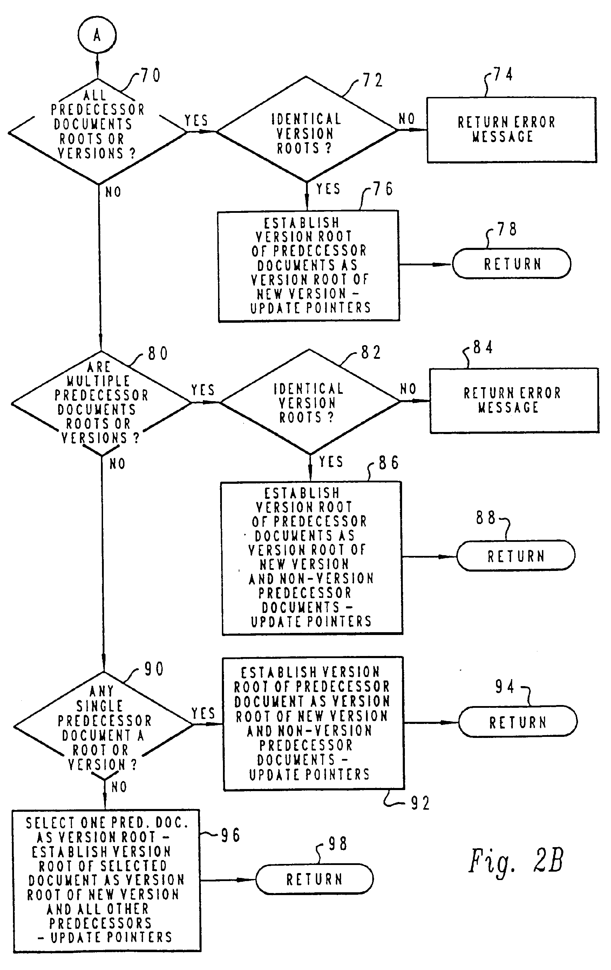

Referring now to Fig. 2 there is depicted a high level logic flow chart illustrating a software implementation of the method and system of the present invention. As depicted, the process begins at block 50 thereafter passes to block 52 which illustrates a determination of whether or not the user desires to create a version of an existing document. If not, the process passes to block 54 and returns. In the event the user does desire to create a version of an existing document, as determined at block 52, the process passes to block 56. Block 56 illustrates the selection by the user of at least one predecessor document.

Next, the process passes to block 58 which, in accordance with an important feature of the present invention, illustrates a determination of the number of predecessor documents selected by a user. In the event a single predecessor document has been selected, the process passes to block 60. Block 60 depicts a determination of whether or not the predecessor document selected is a root document or a version of a root document. If not, the process passes to block 62 which illustrates the establishment of a version-root identifier for the predecessor document and the association of that version-root identifier with both the predecessor document and the current document under creation. Thereafter, the pointers within the electronic library are updated and the process passes to block 64 and returns.

Referring again to block 60, in the event the predecessor document of the current version under creation is a root document or a version of a root document, the process passes to block 66. Block 66 illustrates the copying of the version-root identifier of the predecessor document to the current document under creation and the updating of the previous and next-version pointers for both documents. The process then passes to block 64 and returns.

Referring again to block 58 in the event the user has selected multiple predecessor documents for utilization in creation of the current version, the process passes to block 70. Block 70 depicts a determination of whether or not all predecessor documents selected by the user are either a root document or versions of a root document. If so, the process passes to block 72 which depicts a determination of whether or not all version-root identifications associated with the selected predecessor documents are identical. If not, the process passes to block 74 and returns an error message. Those skilled in the art will appreciate that in order to maintain a Conceptual Document wherein all documents within the Conceptual Document are related it is necessary that all documents contained therein have associated therewith an identical version-root identifier.

Referring again to block 72, in the event all predecessor documents selected by the user include identical version-root identifiers, the process passes to block 76. Block 76 illustrates the assigning of the version-root identifier to the current document under creation and the updating of the pointers to those documents within the electronic library. The process then passes to block 78 and returns.

Referring again to block 70, in the event all predecessor documents selected by the user for inclusion in the creation of the present version document are not either root document or a version of a root document the process passes to block 80. Block 80 illustrates a determination of whether or not multiple predecessor documents within the plurality of predecessor documents selected by their user are either a root document or a version of a root document. If so, the process passes to block 82. Block 82 illustrates a determination of whether or not each of the multiple predecessor documents which is either a root document or a version of a root document includes the identical version-root identifier. If not, as above, the process passes to block 84 and returns an error message to the user.

In the event each of the multiple predecessor documents which is a document version includes an identical version-root identifier, as determined at block 82, the process then passes to block 86 wherein the version-root identifier present within the multiple predecessor documents is assigned to the current version under creation and all non-version predecessor documents within the plurality of predecessor documents selected by the user. The pointers to those documents are then updated. Thereafter, the process passes to block 88 and returns.

Referring again to block 80, in the event multiple predecessor documents within the predecessor documents selected by the user are not either root documents or versions of a root document, the process passes to block 90. Block 90 illustrates a determination of whether or not any single predecessor document within the multiple predecessor documents selected by the user is either a root document or a version of a root document and if so, the process passes to block 92. Block 92 illustrates the assigning of the version-root identifier of the single predecessor document which is either a root document or a version of a root document to the version under construction and all other non-version predecessor documents. Thereafter, the process returns, as depicted at block 94.

Referring again to block 90, in the event no single predecessor document within the plurality of predecessor documents selected by the user is either a root document or a version of a root document, the process passes to block 96. Block 96 illustrates an important feature of the present invention in which the system automatically selects one of the predecessor documents as a root document and thereafter assigns a version-root identifier of that document to all predecessor documents selected by the user and to the current version of the document under creation. The pointers to these documents are then updated and the process then returns, as depicted at block 98.

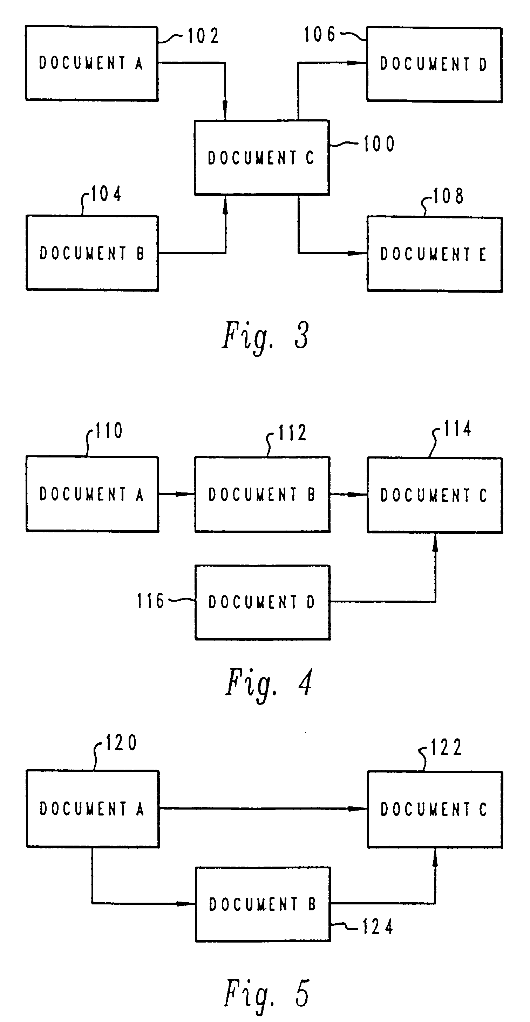

With reference now to Fig. 3, there is depicted a pictorial representation of a first Conceptual Document structure which may be implemented utilizing the method and system of the present invention. As illustrated, a document C, at reference numeral 100, is depicted having multiple predecessor documents 102 and 104 and multiple successor documents 106 and 108. As described above with respect to the logic flowchart all version-root identifiers for predecessor documents 102 and 104, where present, must be identical and will thereafter be utilized as the version-root identifier for all successor documents within the Conceptual Document. In the event neither predecessor document 102 or predecessor document 104 includes a version-root attribute, the office Library Server, in accordance with an important feature of the present invention, will select the Unique Permanent Identifier of either predecessor document 102 or 104 as the version-root of the Conceptual Document depicted within Fig. 3 and this version-root identifier will then be added to the attribute of each document within the Conceptual Document depicted within Fig. 3. Thus, documents 100, 106 and 108 will each thereafter include a version-root identifier selected by the Library Server from either predecessor document 102 or predecessor document 104.

Referring now to Fig. 4 there is depicted a pictorial relationship of a second Conceptual Document structure which may be implemented utilizing the method and system of the present invention. As depicted in Fig. 4, document A, at reference numeral 110, is the predecessor document for document B, at reference numeral 112. Document B, at reference numeral 112, and document D, at reference numeral 116, are both predecessor documents of document C, at reference numeral 114. Thus, any document may be included in a Conceptual Document as a predecessor of another document which is being added to the Conceptual Document, if that document is not a member of a second Conceptual Document (there is no version-root identifier present which is not identical to the version-root of the documents within the present Conceptual Document). In accordance with an important feature of the present invention, predecessor document D, at reference numeral 116, will automatically be assigned the same version-root identifier of document A, at reference numeral 110, as that version-root identifier will be automatically associated with document C, at reference numeral 114.

Finally, with reference to Fig. 5 there is depicted a pictorial representation of a third Conceptual Document structure which may be implemented utilizing the method and system of the present invention. As illustrated in Fig. 5, a predecessor document A, at reference numeral 120, is utilized to create a successor version document C, at reference numeral 122 and a successor version document B, at reference numeral 124. Document C also includes as a predecessor document B, at reference numeral 124. Thus, any document within the same Conceptual Document may have multiple predecessors, so long as those predecessors are not coincident. That is, document A, at reference numeral 120, and document B at reference numeral 124, may be utilized as multiple predecessor documents for a third document since these predecessors share the same version-root identifier.

Additionally, the depicted embodiment of the present invention will automatically update all pointers within the library by automatically assigning a unique version-name to each newly created version document while also including in association with such version documents an identification of the immediate predecessor document(s). Further, when a document is utilized as a predecessor, an indication of the unique version name of its successor will be associated with the predecessor document. In this manner, a Library Service may easily keep track of all related documents within a single Conceptual Document.

Upon reference to the foregoing those skilled in the art will appreciate that the Applicants herein have created a method and system which may be utilized to create and maintain multiple document versions in a data processing system implemented library wherein each document therein may have multiple predecessors and multiple successors. This flexible model of versioning allows many different combinations of Conceptual Document structures, greatly enhancing the flexibility of a data processing system implemented library.

## Claims

1. A method in a data processing system implemented library for creating and maintaining multiple versions of a document within said library, said method comprising the data processing system implemented steps of:
uniquely identifying an original document within said library as a root document;
establishing a version-root identifier for all successor versions of said original document which may thereafter be created within said library;
automatically associating said version-root identifier with each successor version of said original document within said library;
characterized by the data processing system implemented steps of:
for each successor version of said original document and a second predecessor document, automatically associating (76, 86, 92) said version-root identifier with said successor version and said second predecessor document wherein all related documents within said library will have an identical version-root identifier associated therewith.

2. The method in a data processing system implemented library for creating and maintaining multiple versions of a document within said library according to Claim 1, further including the step of, for each successor version of a first predecessor document and a second predecessor document, automatically identifying (96) a selected one of said predecessor documents as a root document and establishing a particular version-root identifier for all successor versions thereof; and
thereafter, automatically associating (96) said particular version-root identifier with said successor version of said first predecessor document and said second predecessor document.

3. The method in a data processing system implemented library for creating and maintaining multiple versions of a document within said library according to Claim 1 or 2, further including the step of associating an identification of an immediate predecessor document with each successor document within said library.

4. The method in a data processing system implemented library for creating and maintaining multiple versions of a document within said library according to one of Claims 1 to 3, further including the step of associating a unique version-name with each successor version of said original document.

5. A data processing system for creating and maintaining multiple versions of a document within a library within said data processing system, said data processing system comprising:
means for uniquely identifying an original document within said library as a root document;
means for establishing a version-root identifier for all successor versions of said original document which may thereafter be created within said library;
means for automatically associating said version-root identifier with each successor version of said original document within said library;
characterized in that said data processing system further comprises;
means for automatically associating (76, 86, 92) said version-root identifier with a successor version of said original document and a second predecessor document, wherein all related documents within said library will have an identical version-root identifier associated therewith.

6. The data processing system for creating and maintaining multiple versions of a document within a library within said data processing system according to Claim 5, further including means for, for each successor version of a first predecessor document and a second predecessor document, automatically identifying (96) a selected one of said predecessor documents as a root document and establishing a particular version-root identifier for all successor versions thereof; and
thereafter, automatically associating (96) said particular version-root identifier with said successor version of said first predecessor document and said second predecessor document.

7. The data processing system for creating and maintaining multiple versions of a document within a library within said data processing system according to Claim 5 or 6, further including means for associating an identification of an immediate predecessor document with each successor version document within said library.

8. The data processing system for creating and maintaining multiple versions of a document within a library within said data processing system according to one of Claims 5 to 7, further including means for associating a unique version-name with each successor version of said original document.

## Patentansprüche

1. Verfahren, mit dem in einer Datenverarbeitungssystembibliothek mehrere Versionen eines Dokumentes in der Bibliothek erstellt und verwaltet werden, wobei das Verfahren die folgenden in dem Datenverarbeitungssystem implementierten Schritte umfaßt:
eindeutige Kennzeichnung eines Ausgangsdokumentes in der Bibliothek als ein Stammdokument;
Erstellung eines Stammversionszeigers für alle Folgeversionen des Ausgangsdokumentes, die möglicherweise zu einem späteren Zeitpunkt in der Bibliothek erstellt werden;
automatische Zuordnung des Stammversionszeigers zu jeder Folgeversion des Ausgangsdokumentes in der Bibliothek;
durch die folgenden in dem Datenverarbeitungssystem implementierten Schritte gekennzeichnet:
für jede Folgeversion des Ausgangsdokumentes und eines zweiten Vorgängerdokumentes die automatische Zuordnung (76, 86, 92) des Stammversionszeigers zu der Folgeversion und dem zweiten Vorgängerdokument, wobei allen miteinander zusammenhängenden Dokumenten in der Bibliothek derselbe Stammversionszeiger zugeordnet wird.

2. Verfahren, mit dem nach Anspruch 1 in einer Datenverarbeitungssystembibliothek mehrere Versionen eines Dokumentes in der Bibliothek erstellt und verwaltet werden, das ferner für jede Folgeversion eines ersten Vorgängerdokumentes und eines zweiten Vorgängerdokumentes den Schritt umfaßt, bei dem ein ausgewähltes Dokument der Vorgängerdokumente automatisch als Stammdokument gekennzeichnet wird (96) und ein bestimmter Stammversionszeiger für alle Folgeversionen dieses Dokumentes erstellt wird; und
anschließend die automatische Zuordnung (96) des bestimmten Stammversionszeigers zu der Folgeversion des ersten Vorgängerdokumentes und des zweiten Vorgängerdokumentes.

3. Verfahren, mit dem nach den Ansprüchen 1 oder 2 in einer Datenverarbeitungssystembibliothek mehrere Versionen eines Dokumentes in der Bibliothek erstellt und verwaltet werden können, das ferner den Schritt umfaßt, bei dem jedem Folgedokument in der Bibliothek eine Kennzeichnung eines unmittelbar vorhergehenden Dokumentes zugeordnet wird.

4. Verfahren, mit dem nach den Ansprüchen 1 bis 3 in einer Datenverarbeitungssystembibliothek mehrere Versionen eines Dokumentes in der Bibliothek erstellt und verwaltet werden können, das ferner den Schritt umfaßt, bei dem jeder Folgeversion des Ausgangsdokumentes ein eindeutiger Versionsname zugeordnet wird.

5. Datenverarbeitungssystem für die Erstellung und Verwaltung mehrerer Versionen eines Dokumentes in einer Bibliothek in diesem Datenverarbeitungssystem, wobei das Datenverarbeitungssystem folgendes umfaßt:
Mittel für die eindeutige Kennzeichnung eines Ausgangsdokumentes in der Bibliothek als ein Stammdokument;
Mittel für die Erstellung eines Stammversionszeigers für alle Folgeversionen des Ausgangsdokumentes, die möglicherweise zu einem späteren Zeitpunkt in der Bibliothek erstellt werden;
Mittel für die automatische Zuordnung des Stammversionszeigers zu jeder Folgeversion des Ausgangsdokumentes in der Bibliothek;
dadurch gekennzeichnet, daß das Datenverarbeitungssystem ferner folgendes umfaßt:
Mittel für die automatische Zuordnung (76, 86, 92) des Stammversionszeiger zu einer Folgeversion des Ausgangsdokumentes und eines zweiten Vorgängerdokumentes, wobei allen zusammenhängenden Dokumente in der Bibliothek derselbe Stammversionszeiger zugeordnet wird.

6. Datenverarbeitungssystem für die Erstellung und Verwaltung von mehreren Versionen eines Dokumentes in einer Bibliothek in dem Datenverarbeitungssystem nach Anspruch 5, das ferner Mittel umfaßt, mit denen für jede Folgeversion eines ersten Vorgängerdokumentes und eines zweiten Vorgängerdokumentes automatisch ein ausgewähltes Dokument der Vorgängerdokumente als Stammdokument gekennzeichnet (96) und ein bestimmter Stammversionszeiger für alle Folgeversionen dieses Dokumentes erstellt wird; und
anschließend die automatische Zuordnung (96) des bestimmten Stammversionszeigers zu der Folgeversion des ersten Vorgängerdokumentes und des zweiten Vorgängerdokumentes.

7. Datenverarbeitungssystem für die Erstellung und Verwaltung mehrerer Versionen eines Dokumentes in einer Bibliothek in dem Datenverarbeitungssystem nach Anspruch 5 oder 6, das ferner Mittel umfaßt, mit denen jeder Folgedokumentversion in der Bibliothek eine Kennzeichnung eines unmittelbar vorhergehenden Dokumentes zugeordnet wird.

8. Datenverarbeitungssystem für die Erstellung und Verwaltung mehrerer Versionen eines Dokumentes in einer Bibliothek in dem Datenverarbeitungssystem nach einem der Ansprüche 5 bis 7, das ferner Mittel umfaßt, mit denen jeder Folgeversion des Ausgangsdokumentes ein eindeutiger Versionsname zugeordnet wird.

## Revendications

1. Procédé mis en oeuvre dans une bibliothèque installée dans un système de traitement des données, pour créer et conserver des versions multiples d'un document dans ladite bibliothèque, ledit procédé comprenant les étapes, ayant fait l'objet d'une installation dans le système de traitement des données, indiquées ci-après :
attribution d'une identification unique d'un document original dans ladite bibliothèque, à titre de document racine;
établissement d'un identificateur racine de la version pour toutes les versions successives dudit document originel pouvant être créées par la suite dans ladite bibliothèque;
association automatique dudit identificateur de racine de version à chaque version successive dudit document originel dans ladite librairie;
caractérisé par les étapes, ayant fait l'objet d'une installation dans le système de traitement de données, indiquées ci-après :
pour chaque version successive dudit document originel et d'un deuxième document prédécesseur, association automatique (76, 86, 92) dudit identificateur de racine de version à ladite version successive et audit deuxième document prédécesseur, dans lequel tous les documents concernés dans ladite librairie vont se voir associer un identificateur de racine de version identique.

2. Procédé, dans une bibliothèque installée dans un système de traitement de données, de création et de conservation de versions multiples d'un document dans ladite librairie selon la revendication 1, comprenant en outre l'étape consistant, pour chaque version successeur d'un premier document prédécesseur et d'un deuxième document prédécesseur, d'identification automatique (96) d'un document sélectionné parmi lesdits documents prédécesseurs, à titre de document racine, et établissement d'un identificateur de racine de version particulier pour toutes ses versions successeurs; et
puis, association automatique (96) dudit identificateur de racine de version particulier à ladite version successeur dudit premier document prédécesseur et dudit deuxième document prédécesseur.

3. Procédé, dans une bibliothèque installée dans un système de traitement de données, pour créer et conserver des versions multiples d'un document dans ladite bibliothèque selon la revendication 1 ou 2, comprenant en outre l'étape d'association d'une identification d'un document prédécesseur immédiat à chaque document successeur dans ladite librairie.

4. Procédé, dans une bibliothèque installée dans un système de traitement de données, pour créer et conserver des versions multiples d'un document dans ladite bibliothèque selon l'une des revendications 1 à 3, comprenant en outre l'étape d'association d'un nom de version unique à chaque version successeur dudit document originel.

5. Système de traitement de données, pour créer et conserver des versions multiples d'un document dans une librairie située dans ledit système de traitement de données, ledit système de traitement de données comprenant :
des moyens pour attribuer une identification unique à un document originel dans ladite librairie, à titre de document racine;
des moyens pour établir un identificateur de racine de version pour toutes les versions successeurs dudit document originel pouvant être crée ensuite dans ladite librairie;
des moyens pour effectuer une association automatique entre ledit identificateur de racine de version et chaque version successeur dudit document originel dans ladite librairie;
caractérisé en ce que ledit système de traitement de données comprend en outre :
des moyens pour effectuer une association automatique (76, 86, 92) dudit identificateur de racine de version à une version successeur dudit document originel et d'un deuxième document prédécesseur, dans lequel tous les documents concernés dans ladite librairie vont se voir associer un identificateur de racine de version identique.

6. Système de traitement de données, pour créer et conserver des versions multiples d'un document dans une librairie dans ledit système de traitement de données, suivant la revendication 5, comprenant en outre des moyens pour assurer, pour chaque version successeur d'un premier document prédécesseur et d'un deuxième document prédécesseur, une identification automatique (96) d'un document sélectionné parmi lesdits documents prédécesseurs à titre de document racine et établir un identificateur de racine de version particulier pour toutes ses versions successeurs; et
puis, effectuer une association automatique (96) dudit identificateur de racine de version particulier à ladite version successeur dudit premier document prédécesseur et dudit deuxième document prédécesseur.

7. Système de traitement de données, pour créer et conserver des versions multiples d'un document dans une librairie dans ledit système de traitement de données, suivant la revendication 5 ou 6, comprenant en outre un moyen pour assurer l'association d'une identification d'un document prédécesseur immédiat à chaque document de version successeur dans ladite librairie.

8. Système de traitement de données, pour créer et conserver des versions multiples d'un document dans une librairie dans ledit système de traitement de données, selon l'une des revendications 5 ou 7, comprenant en outre des moyens pour associer un nom de version unique à chaque version successeur dudit document originel.
